# EUROPEAN PATENT APPLICATION

(11) **EP 4 668 120 A1**
(43) Date of publication of application: **24.12.2025**
(21) Application number: 25181292.1
(22) Date of filing: 06.06.2025
(51) Int. Cl.: G06F 11/30, G06F 11/34, G06F 16/21

(54) **INFORMATION PROCESSING APPARATUS, INFORMATION PROCESSING METHOD, AND COMPUTER PROGRAM**

(30) Priority: 17.06.2024 JP 2024097594
(71) Applicant: FUJITSU LIMITED, Kawasaki-shi, Kanagawa 211-8588 (JP)
(72) Inventor: UMEDA, Naoki, Kawasaki-shi, Kanagawa, 211-8588 (JP); MAEDA, Takuma, Kawasaki-shi, Kanagawa, 211-8588 (JP); SHIMOYAMA, Ryota, Kawasaki-shi, Kanagawa, 211-8588 (JP); SANO, Kaito, Kawasaki-shi, Kanagawa, 211-8588 (JP)
(74) Representative: Hoffmann Eitle

(57) **Abstract**

A storage device stores the update frequency of statistical information acquired for each of a plurality of tables included in a database and the number of records in each of the plurality of tables. A processing unit determines, among the plurality of tables, a table whose statistical information has an update frequency that is greater than a first threshold and in which the number of records is greater than a second threshold, as a statistical information fixation target.

## Description

### FIELD

The embodiments discussed herein relate to an information processing apparatus, an information processing method, and a computer program.

### BACKGROUND

In an information processing system, a database may be used to manage data. Software called a database management system (DBMS) is used to manipulate data in a database. The DBMS executes processing on the database based on a query such as data update or search.

A method of supporting performance improvement of a database has been considered. For example, there is a proposal of a monitoring server that monitors performance by extracting transaction information including structured query language (SQL), a response time, and a processing result from a network stream transmitted and received between a client and a database. The monitoring server calculates a statistical value from the extracted transaction information and searches for an improvement proposal of the SQL using the statistical value.

In addition, there is a proposal of a database tuning support device that automatically collects performance index values during operation of a database system and stores the performance index values as time-series information. The database tuning support device compares a performance index value in a designated first time zone and a performance index value in a designated second time zone among a series of stored performance index values, and generates a deterioration degree of the corresponding performance index. The database tuning support device outputs the generated deterioration degree as database tuning support information. See, for example, the following literatures.

Japanese Laid-open Patent Publication No. JP 2019-114241

Japanese Laid-open Patent Publication No. H09-16617

The DBMS may improve the processing performance by creating an execution plan of queries in advance and executing the queries in accordance with the execution plan. The execution plan is information that defines indexes to be used at the time of execution of queries, presence or absence of sorting of records in a table, a joining order of tables, and the like.

The execution plan is created based on statistical information per table included in the database. The statistical information is information indicating a data state. The data state is represented by data amounts and data deviation. The data amounts are, for example, the number of records and the number of pages used in a table. The data deviation is, for example, a value redundancy ratio, the number of types of values, and a degree of distribution, for each column in a table. The statistical information is updated, for example, at a timing based on the update amount of the corresponding table.

As the deviation between the data state indicated by the statistical information and the actual data state increases, the possibility that an inappropriate execution plan is created increases, and performance degradation may occur. For example, in a case where the frequency of data update is very high and the update of the statistical information is not in time, there is a possibility that the statistical information used for creating an execution plan and the actual data state deviate from each other.

On the other hand, some DBMSs have a function of fixing statistical information in order to suppress performance degradation caused by the statistical information not updated in time and to stabilize throughput. Specifically, a DBMS fixes the statistical information used for creating an execution plan to statistical information acquired in advance at a timing when the performance is stable. Since the fixed statistical information does not change, the execution plan created based on the statistical information also does not change. In this way, by fixing the statistical information, the query processing performance is leveled.

However, there is no clear index for selecting a table whose statistical information is to be fixed. Therefore, it is conceivable to use all tables in the database as the statistical information fixation targets. However, if all the tables are used as the statistical information fixation targets, unnecessary tables are fixed, causing a problem that the work cost of post-fixation table management increases. Specifically, after statistical information is fixed, the statistical information used for an execution plan does not follow the data variation, and thus an appropriate execution plan is not created. Thus, update or re-fixation of the statistical information needs to be executed even after the table is fixed, and accordingly, the table monitoring or maintenance work is needed. When an entire database including a large number of tables is fixed, the cost of such work increases.

### SUMMARY

It is an object in one aspect of the embodiments to appropriately select a table as statistical information fixation target.

In one aspect, there is provided an information processing apparatus including: memory means for storing an update frequency of statistical information acquired for each of a plurality of tables included in a database and a number of records in each of the plurality of tables; and processing means for determining, among the plurality of tables, a table whose statistical information has an update frequency that is greater than a first threshold and in which the number of records is greater than a second threshold, as a statistical information fixation target.

### BRIEF DESCRIPTION OF DRAWINGS

FIG. 1 is a diagram illustrating an information processing apparatus according to a first embodiment;
FIG. 2 is a diagram illustrating an example of an information processing system according to a second embodiment;
FIG. 3 is a diagram illustrating an example of hardware of an information processing apparatus;
FIG. 4 is a diagram illustrating an example of creating an execution plan;
FIG. 5 is a diagram illustrating an example of creating an execution plan based on fixed statistical information;
FIG. 6 is a diagram illustrating an example of suppressing performance degradation by fixing statistical information;
FIG. 7 is a diagram illustrating an example of functions of the information processing apparatus;
FIG. 8 is a diagram illustrating an example of statistical information;
FIG. 9 is a diagram illustrating an example of a table information file;
FIG. 10 is a diagram illustrating an example of table selection criteria;
FIG. 11 is a diagram illustrating an example of selection criteria variation patterns;
FIG. 12 is a diagram illustrating an adjustment example of the selection criteria;
FIG. 13 is a diagram illustrating a processing example of performance verification;
FIG. 14 is a diagram illustrating the first half of a processing example of table selection;
FIG. 15 is a diagram illustrating the second half of the processing example of the table selection;
FIG. 16 is a diagram illustrating an example of a flow of the table selection;
FIG. 17 is a diagram illustrating the first half of a specific example of the table selection; and
FIG. 18 is a diagram illustrating the second half of the specific example of the table selection.

### DESCRIPTION OF EMBODIMENTS

Hereinafter, embodiments will be described with reference to the drawings.

### [First Embodiment]

A first embodiment will be described.

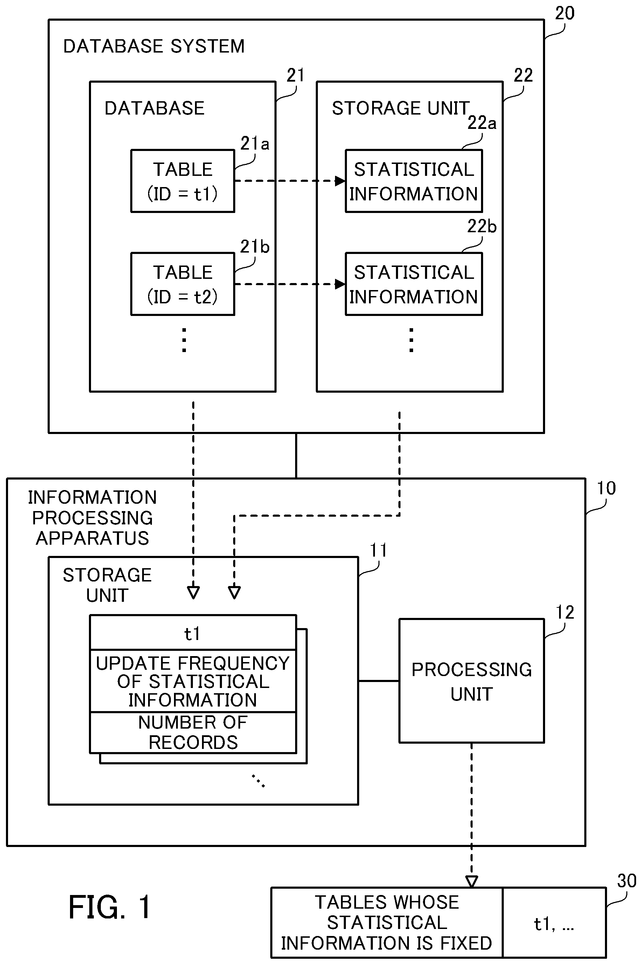

FIG. 1 is a diagram illustrating an information processing apparatus according to a first embodiment.

An information processing apparatus 10 is connected to a database system 20. The database system 20 is a computer system that provides a database 21. The database 21 manages user data using a plurality of tables. The database system 20 includes a storage unit 22 that stores information related to the database 21. A storage area and the storage unit 22 of the database 21 are implemented by a storage device such as a hard disk drive (HDD) or a solid state drive (SSD) included in the database system 20. The storage unit 22 may be a part of the storage area of the database 21.

The database system 20 executes a DBMS. The DBMS receives an input of a query related to the database 21 and executes the query. The query is described in SQL. The DBMS creates statistical information related to an individual table of the database 21, and creates a query execution plan based on the statistical information.

The information processing apparatus 10 includes a storage unit 11 and a processing unit 12. The storage unit 11 may be a volatile semiconductor memory such as a random access memory (RAM) or a non-volatile storage such as an HDD or a flash memory. The processing unit 12 is, for example, a processor such as a central processing unit (CPU), a graphics processing unit (GPU), or a digital signal processor (DSP). However, the processing unit 12 may include a special-purpose electronic circuit such as an application specific integrated circuit (ASIC) or a field programmable gate array (FPGA). The processor executes a program stored in a memory (or the storage unit 11) such as a RAM. A set of a plurality of processors may be referred to as "multiprocessor" or simply as "processor".

For example, the database 21 includes tables 21a, 21b, and so on. An identifier (ID) of the table 21a is "t1". An ID of the table 21b is "t2". The tables 21a, 21b, and so on include tables that hold user data used for applications or the like used by a user and tables that hold indexes or the like used for improving the efficiency of data management in the database 21.

The database system 20 creates statistical information 22a about the table 21a by using DBMS functions. The database system 20 creates statistical information 22b about the table 21b. In this way, the database system 20 creates statistical information for each table.

Statistical information indicates the data state of a table. For example, the statistical information about a includes index values indicating data amounts such as the number of records and the number of pages used in the table. In addition, the statistical information includes index values indicating data deviation such as a value redundancy ratio, the number of types of values, and a degree of distribution for each column in the table.

For example, the database system 20 executes a query for the database 21, and monitors an update amount of data in each table. If the update amount of a certain table exceeds a threshold, the database system 20 updates the statistical information about this certain table. Thereafter, the database system 20 resets the update amount of the table for which statistical information is created and continues the monitoring. The statistical information may be updated in response to a user's instruction to execute an analyze command.

The statistical information is used to create a query execution plan. The execution plan is information in which the processing order and contents (for example, indexes to be used, presence or absence of sorting, a table coupling order, and the like), which are referred to when an SQL statement is executed, are determined in advance. For example, even in the case of the same SQL statement for searching a table having two indexes a and b, an execution plan in which only a is used or an execution plan in which a and b are used in combination is created depending on the states of the indexes a and b.

The DBMS in the database system 20 has a function of fixing statistical information used for creating an execution plan. By fixing the statistical information, the execution plan created based on the statistical information is fixed, and the execution performance of queries for the database 21 is leveled. The processing unit 12 selects a table whose statistical information is to be fixed, from the plurality of tables included in the database 21 as follows.

The storage unit 11 stores the update frequency of the statistical information acquired for each of the plurality of tables included in the database 21 and the number of records in each of the plurality of tables. The processing unit 12 acquires the update frequency of the statistical information about each table and the number of records about each table from the database system 20, and stores the update frequency and the number of records in the storage unit 11.

The processing unit 12 acquires, for example, the number of updates of the statistical information 22a, the number of updates of the statistical information 22b, and so on in a predetermined period from the database system 20. Alternatively, the processing unit 12 may acquire an update history of the statistical information 22a, an update history of the statistical information 22b, and so on in a predetermined period from the database system 20 and may acquire the number of updates of the statistical information 22a, the number of updates of the statistical information 22b, and so on in the predetermined period based on the update histories. The "number of records" may be, for example, an average number of records in a period in which the update frequency of the statistical information is acquired.

For example, the storage unit 11 stores the update frequency of the statistical information about the table 21a and the number of records in the table 21a in association with the ID t1 of the table 21a. The storage unit 11 stores the update frequency of the statistical information about the table 21b and the number of records in the table 21b in association with the ID t2 of the table 21b. The storage unit 11 also stores the update frequency of the statistical information and the number of records for each of all other tables, in association with their respective IDs.

The processing unit 12 compares the update frequency of the statistical information about each of the plurality of tables with a first threshold. In addition, the processing unit 12 compares the number of records in each of the plurality of tables with a second threshold. The processing unit 12 determines, among the plurality of tables, a table whose statistical information has an update frequency that is greater than the first threshold and in which the number of records is greater than the second threshold as a statistical information fixation target. On the other hand, the processing unit 12 determines that, among the plurality of tables, a table whose statistical information has an update frequency that is equal to or less than the first threshold or in which the number of records is equal to or less than the second threshold is not a statistical information fixation target.

After the processing unit 12 determines the statistical information fixation targets, the processing unit 12 may output a list 30 of tables whose statistical information is to be fixed. For example, if the processing unit 12 determines that some tables including the table 21a among all the tables in the database 21 are the statistical information fixation targets, the processing unit 12 outputs the list 30 including the IDs of these tables.

The processing unit 12 may present the content of the list 30 to the user by displaying the content on a display device, or may present the content of the list 30 to the user by transmitting the list 30 to a terminal device used by the user via a network. The user is able to enter a command for fixing the statistical information about the tables indicated by the list 30 to the database system 20. The database system 20 fixes the statistical information about the tables based on the command.

Alternatively, the processing unit 12 may enter the list 30 to the database system 20 to cause the database system 20 to fix the statistical information about the tables included in the list 30.

The database system 20 may be a verification environment prepared separately from a database system in the production environment. In this case, the processing unit 12 may cause the database system 20 to execute a set of queries for performance verification for a predetermined period of time, to acquire the update frequency of the statistical information and the number of records per table and determine the tables whose statistical information is to be fixed. The user may refer to the list 30 that has been output by the processing unit 12 and cause the database system in the production environment to fix the statistical information about the tables indicated by the list 30.

As described above, with the information processing apparatus 10 according to the first embodiment, the update frequency of the statistical information about each of the plurality of tables included in the database 21 and the number of records included in each of the plurality of tables are acquired. Among the plurality of tables, the tables whose statistical information has an update frequency that is greater than the first threshold and in which the number of records is greater than the second threshold are determined as the statistical information fixation targets. In this way, the information processing apparatus 10 is able to appropriately select the tables whose statistical information is to be fixed. In addition, the information processing apparatus 10 is able to support fixation of statistical information for the purpose of preventing performance degradation due to a rapid change in data in advance, for tables in an effective and appropriate range.

Here, as the deviation between the actual data state and corresponding statistical information increases, the execution plan based on the statistical information becomes more inappropriate, and the processing performance on the database 21 deteriorate more easily. Such performance degradation may occur in a situation in which data fluctuates to such an extent that further update is needed before the update of the statistical information is completed.

The processing unit 12 is able to detect such a change in data, based on the update frequency of the statistical information and the number of records. As described above, if data in a table is updated more frequently, the statistical information is also updated more frequently. Further, it is considered that a table including a greater number of records is updated more frequently. Thus, it is estimated that by fixing the statistical information about a table whose statistical information is updated more frequency and which has a greater number of records, the performance degradation is more likely to be reduced. Therefore, by determining tables whose statistical information has an update frequency that is greater than the first threshold and in which the number of records is greater than the second threshold as the statistical information fixation targets, the processing unit 12 is able to appropriately select the tables whose statistical information is to be fixed.

In addition, with the information processing apparatus 10, since the tables whose statistical information is to be fixed are appropriately selected from all the tables in the database 21, there is no need to set all the tables as the statistical information fixation targets. As a result, the information processing apparatus 10 does not need to perform the monitoring and maintenance work related to the statistical information on all the tables. Thus, as compared with the case where all the tables are set as the statistical information fixation targets, the cost needed for the work is reduced. As described above, with the information processing apparatus 10, it is possible to efficiently suppress deterioration in processing performance of the database 21.

For example, there is a method in which part of the tables is set as a statistical information fixation target. In this method, a table related to a query in which performance degradation such as an increase in processing time has occurred is identified, and this table is set as a fixation target. However, in this method, since measures are taken only after performance degradation is detected, there is a problem in that the performance degradation will not be prevented in advance.

On the other hand, with the information processing apparatus 10, even if no performance degradation is detected, it is possible to appropriately select the tables whose statistical information is to be fixed. Therefore, the information processing apparatus 10 is able to prevent performance degradation in advance.

### [Second Embodiment]

Next, a second embodiment will be described.

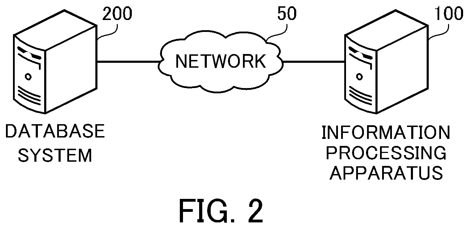

FIG. 2 is a diagram illustrating an example of an information processing system according to a second embodiment.

The information processing system according to the second embodiment includes an information processing apparatus 100 and a database system 200. The information processing apparatus 100 and the database system 200 are connected by a network 50. The database system 200 is a verification database system provided separately from a database system in the production environment. The database system 200 has the same database as the database system in the production environment. In FIG. 2, illustration of the database system in the production environment is omitted.

The information processing apparatus 100 executes performance verification on the database system 200. The information processing apparatus 100 may be a computer. The information processing apparatus 100 selects a table whose statistical information is to be fixed among all the tables in the database in the database system 200 through the performance verification on the database system 200. The information processing apparatus 100 notifies the user of the selected table and supports fixation of the statistical information about a corresponding table in the database system in the production environment.

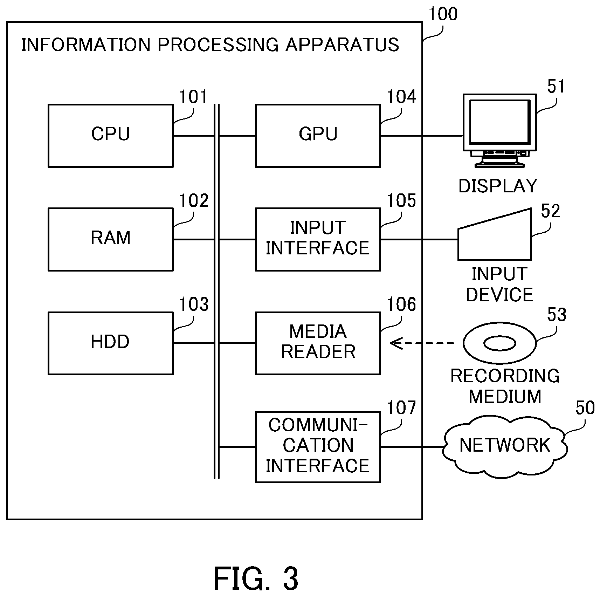

FIG. 3 is a diagram illustrating an example of hardware of the information processing apparatus.

The information processing apparatus 100 includes a processor 101, a RAM 102, an HDD 103, a GPU 104, an input interface 105, a media reader 106, and a communication interface 107. These units included in the information processing apparatus 100 are connected to a bus inside the information processing apparatus 100. The processor 101 corresponds to the processing unit 12 according to the first embodiment. The RAM 102 or the HDD 103 corresponds to the storage unit 11 according to the first embodiment.

The processor 101 is an arithmetic device that executes program commands. The processor 101 is, for example, a CPU. The processor 101 loads at least a part of the programs or data stored in the HDD 103 into the RAM 102, and executes the program. The processor 101 may include a plurality of processor cores. The information processing apparatus 100 may include a plurality of processors. Among a plurality of processes executed by the information processing apparatus 100, two different processors may execute two different processes. The processing described below may be executed in parallel using a plurality of processors or processor cores. A set of a plurality of processors may be referred to as "multiprocessor" or simply as "processor". The processor may be referred to as "processor circuitry".

The RAM 102 is a volatile semiconductor memory that temporarily stores programs to be executed by the processor 101 and data to be used by the processor 101 for computation. The information processing apparatus 100 may include a memory of a type other than the RAM, or may include a plurality of memories.

The HDD 103 is a non-volatile storage device that stores software programs such as an operating system (OS), middleware, and application software, and data. The information processing apparatus 100 may include another type of storage device such as a flash memory or an SSD, or may include a plurality of nonvolatile storage devices.

The GPU 104 outputs an image to a display 51 connected to the information processing apparatus 100 in accordance with a command from the processor 101. The display 51 may be any type of display such as a cathode ray tube (CRT) display, a liquid crystal display (LCD), a plasma display, or an organic electro-luminescence (OEL) display.

The input interface 105 acquires an input signal from an input device 52 connected to the information processing apparatus 100 and outputs the input signal to the processor 101. As the input device 52, a pointing device such as a mouse, a touch panel, a touch pad, or a trackball, a keyboard, a remote controller, a button switch, or the like may be used. A plurality of types of input devices may be connected to the information processing apparatus 100.

The media reader 106 is a reading device that reads programs and data recorded in a recording medium 53. As the recording medium 53, for example, a magnetic disk, an optical disc, a magneto-optical disk (MO), a semiconductor memory, or the like may be used. Examples of the magnetic disk include a flexible disk (FD) and an HDD. Examples of the optical disc include a compact disc (CD) and a digital versatile disc (DVD).

For example, the media reader 106 copies a program or data read from the recording medium 53 to another recording medium such as the RAM 102 or the HDD 103. The read program is executed by, for example, the processor 101. The recording medium 53 may be a portable recording medium, and may be used to distribute programs and data. The recording medium 53 or the HDD 103 may be referred to as a computer-readable recording medium.

The communication interface 107 is connected to the network 50 and communicates with other information processing apparatuses via the network 50. The communication interface 107 may be a wired communication interface connected to a wired communication device such as a switch or a router, or may be a wireless communication interface connected to a wireless communication device such as a base station or an access point.

The database system 200 is also implemented by hardware similar to that of the information processing apparatus 100.

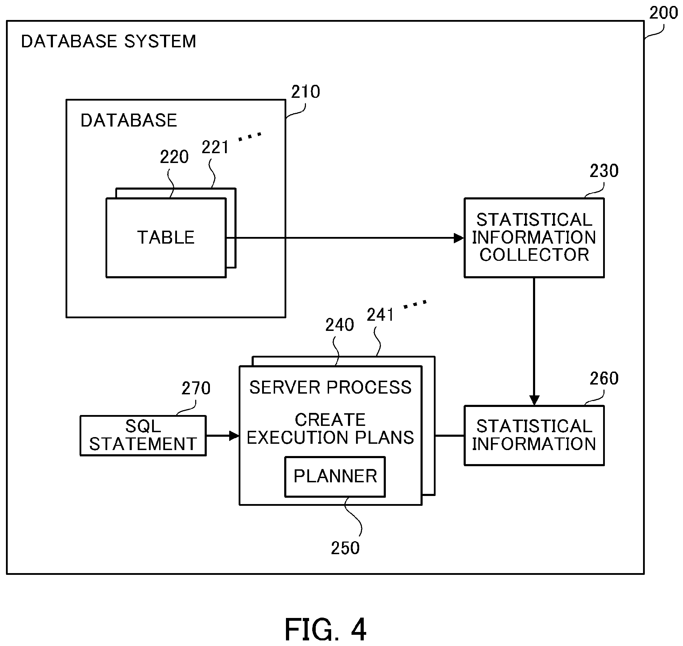

FIG. 4 is a diagram illustrating an example of creating an execution plan.

The database system 200 includes a database 210. The database 210 includes tables 220, 221, and so on. The tables 220, 221, and so on include tables that hold data used for applications or the like used by a user, and includes tables that hold data such as indexes used for controlling data operation in the database 210.

The database system 200 includes a statistical information collector 230 and server processes 240, 241, and so on. The statistical information collector 230 and the server processes 240, 241, and so on are provided by a DBMS executed by the database system 200.

The statistical information collector 230 analyzes the tables 220, 221, and so on, and acquires the statistical information 260 about each of the tables 220, 221, and so on. The statistical information 260 is used to create query execution plans in the server processes 240, 241, and so on. The statistical information is created at a timing when the data update amount of the corresponding table exceeds a threshold. When statistical information is created for a certain table, the data update amount of the table is reset.

Server processes 240, 241, and so on process an input SQL statement 270. For example, the server processes 240, 241, and so on perform data operations on the tables 220, 221, and so on based on the SQL statement 270 received from an application used by the user, and output the results of the data operations. Each of the server processes 240, 241, and so on includes a planner 250. Each planner 250 creates an execution plan indicating an execution procedure of the SQL statement 270 based on the corresponding statistical information 260. The statistical information 260 and the information about the execution plans are stored in a predetermined storage device such as a RAM, an HDD, or an SSD included in the database system 200.

Here, as described above, in order to level the processing performance on the database 210, part or all of the statistical information used to create execution plans may be fixed.

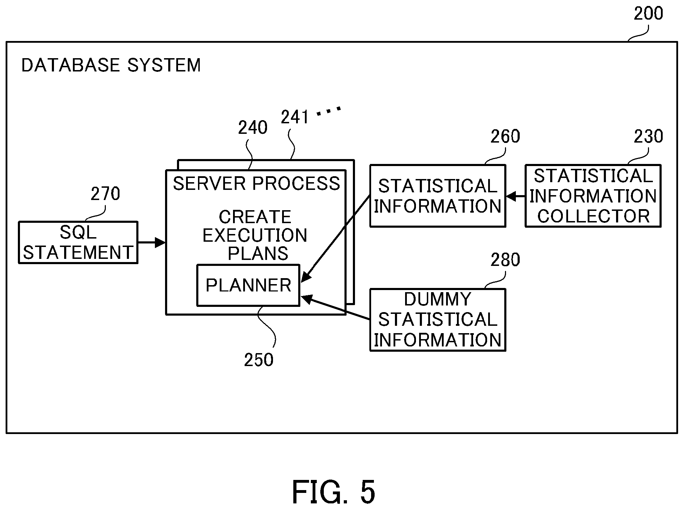

FIG. 5 is a diagram illustrating an example of creating an execution plan based on fixed statistical information.

For example, when fixing statistical information 260 updated by the statistical information collector 230, the database system 200 generates and holds dummy statistical information 280 corresponding to the statistical information 260 separately from the statistical information 260. In this case, when the corresponding planner 250 creates an execution plan, the dummy statistical information 280 is used instead of the statistical information 260. The statistical information is fixed for each table. Therefore, in the creation of an execution plan, for a table whose statistical information is fixed, this fixed statistical information is used. For the other tables, the latest statistical information acquired as needed is used.

The statistical information is fixed, for example, by causing the database system 200 to execute commands illustrated in the following first and second examples. Here, for example, PostgreSQL is used as the DBMS. However, another DBMS may be used.

As a first example, when a time is specified and when the statistical information about a specific table is fixed using a backup acquired before the time, the following command may be used.
SELECT dbms_stats.restore_table_stats ('table name', 'time')

As a second example, when statistical information is fixed to the state at the time of command execution, the following command may be used.
SELECT dbms_stats.lock_table_stats ('table name')

The user or the information processing apparatus 100 is able to enter one of the above commands to the database system 200 and cause the database system 200 to execute the command, so as to create the dummy statistical information 280 corresponding to the table designated by the table name.

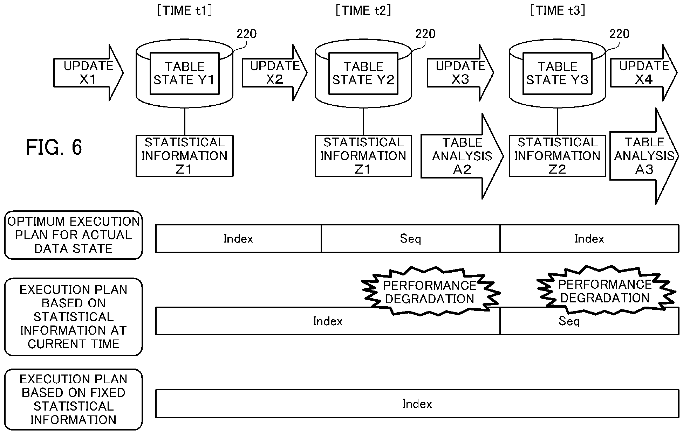

FIG. 6 is a diagram illustrating an example of suppressing performance degradation by fixing statistical information.

The table state of the table 220 changes as follows at times t1, t2, and t3 (t1 < t2 < t3). The table state affects the statistical information, and is represented by, for example, the number of records and the number of pages used in the table, the degree of value redundancy and the degree of value deviation for each column, or the like. At time t1, the table state of the table 220 is a table state Y1 due to a previous update X1. At time t1, the database system 200 holds statistical information Z1 about the table 220.

At time t2, the table state of the table 220 is a table state Y2 due to a previous update X2. At time t2, the database system 200 holds the statistical information Z1 about the table 220. Further, at time t2, a table analysis A2 is started on the table 220 because the update amount of the table 220 from the creation of the previous statistical information exceeds a threshold. The table analysis A2 is executed, for example, by executing an analyze command.

At time t3, the table state of the table 220 is the table state Y3 due to a previous update X3. At time t3, as a result of the table analysis A2, the database system 200 holds statistical information Z2 about the table 220. That is, as a result of the table analysis A2, the statistical information Z1 has been updated to the statistical information Z2. However, the statistical information Z2 corresponds to the table state Y2. After time t3, an update X4 is executed on the table 220, and a table analysis A3 is executed.

It is assumed that optimum execution plans corresponding to certain queries for this actual data state of the table 220 are as follows. The optimum execution plan for the table state Y1 is an index scan (denoted as Index in FIG. 6). The optimum execution plan for the table state Y2 is a sequential scan (denoted by Seq in FIG. 6). The optimum execution plan for the table state Y3 is the index scan.

In this case, at time t2, the database system 200 holds the statistical information Z1 corresponding to the past table state Y1 although the actual table state of the table 220 is Y2. That is, the statistical information has not been updated to the actual state of the table 220 in time. Therefore, although the optimum execution plan for the table state Y2 is the sequential scan, an execution plan for performing the index scan is created based on the statistical information Z1. As a result, the optimum execution plan and the actual execution plan deviate from each other, causing performance degradation when an SQL statement is executed.

At time t3, the database system 200 holds statistical information Z2 corresponding to the past table state Y2 although the actual table state of the table 220 is Y3. That is, the statistical information has not been updated to the actual state of the table 220 in time. Therefore, although the optimum execution plan for the table state Y3 is the index scan, an execution plan for performing the sequential scan is created based on the statistical information Z2. As a result, the optimum execution plan and the actual execution plan deviate from each other, causing performance degradation when an SQL statement is executed.

On the other hand, the database system 200 fixes the statistical information about the table 220 to, for example, the statistical information Z1 at time t1. In this way, an execution plan for performing an index scan is created based on the fixed statistical information Z1 at time t1, t2, and t3. In this case, not the sequential scan but the index scan is appropriately executed on the table state Y3 at time t3. In this way, by fixing the statistical information, it is possible to reduce the possibility that the actual execution plan deviates from the optimum execution plan, and to reduce the possibility that performance degradation occurs.

Therefore, the information processing apparatus 100 provides a function of performing performance verification using the database system 200 and selecting a table whose statistical information is to be fixed based on a result of the performance verification.

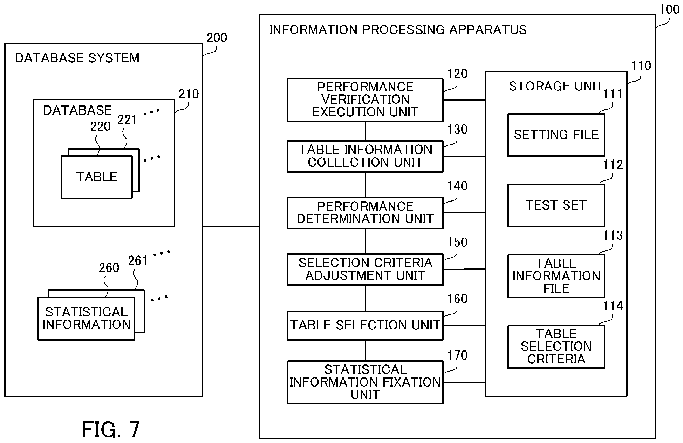

FIG. 7 is a diagram illustrating an example of functions of the information processing apparatus.

The information processing apparatus 100 includes a storage unit 110, a performance verification execution unit 120, a table information collection unit 130, a performance determination unit 140, a selection criteria adjustment unit 150, a table selection unit 160, and a statistical information fixation unit 170. A storage area of the RAM 102 or the HDD 103 is used as the storage unit 110. The performance verification execution unit 120, the table information collection unit 130, the performance determination unit 140, the selection criteria adjustment unit 150, the table selection unit 160, and the statistical information fixation unit 170 are implemented by the processor 101 executing a program stored in the RAM 102.

FIG. 7 also illustrates the database 210 of the database system 200, the tables 220, 221, and so on included in the database 210, and the statistical information 260, 261, and so on about the tables 220, 221, and so on.

The storage unit 110 holds information used for selecting a table whose statistical information is to be fixed. For example, the storage unit 110 stores a setting file 111, a test set 112, a table information file 113, and table selection criteria 114.

The setting file 111 is information in which a performance criterion for the database 210 and a termination condition for table selection based on performance verification are stored. The performance criterion is determined in advance by a user who uses the database 210. For example, when performance verification is executed on a series of processes to be completed within one hour from 12:00 to 13:00, the performance criterion is defined as "one hour". The termination condition indicates the number of repetitions of the table selection process described later. The setting file 111 is stored in the storage unit 110 in advance.

Further, in the setting file 111, a range of tables used as the selection candidates may be defined. For example, all the tables in the database 210 are determined as the range of tables used as the selection candidates.

The test set 112 is a set of SQL statements used for performance verification. The test set 112 is, for example, a set of SQL statements representing the series of processes to be completed within one hour from 12: 00 to 13: 00. The test set 112 is stored in the storage unit 110 in advance. The test set 112 may be referred to as a set of queries indicated by SQL statements, that is, a query set.

The table information file 113 is information indicating the update frequency of the statistical information 260, 261, and so on and the number of records in each of the tables 220, 221, and so on. The update frequency and the number of records are acquired from the database system 200 during the performance verification.

The table selection criteria 114 are information indicating the criteria for selecting the tables as the statistical information fixation targets. In the table selection criteria 114, the tables satisfying all of the following criteria are set as the statistical information fixation targets.

The first criterion is that the update frequency of the statistical information is greater than a first threshold.

The second criterion is that the number of records in the table is greater than a second threshold. The number of records in the table is an average number of records in the table in the performance verification period.

The third criterion is that the number of records in the table does not monotonically increase.

Although not illustrated, the storage unit 110 also stores a list of selected tables.

The performance verification execution unit 120 executes performance verification of the database system 200 based on the setting file 111 and the test set 112. The performance verification execution unit 120 initializes the state of the database 210 each time the verification ends.

The table information collection unit 130 acquires information about each of the tables 220, 221, and so on during the performance verification, and stores the information in the table information file 113.

The performance determination unit 140 determines whether the result of the performance verification satisfies the performance criterion indicated by the setting file 111. The result of the performance verification indicates the time needed to execute all SQL statements included in the test set 112. The performance determination unit 140 determines whether the time is equal to or shorter than the time (for example, "one hour") indicated by the performance criterion.

When the performance determination unit 140 determines that the performance criterion is not satisfied, the selection criteria adjustment unit 150 adjusts the table selection criteria 114. A method of adjusting the table selection criteria 114 will be described later.

The table selection unit 160 selects a table whose statistical information is to be fixed, from the tables 220, 221, and so on, based on the table information file 113 and the table selection criteria 114.

The statistical information fixation unit 170 fixes the statistical information about the table selected by the table selection unit 160. For example, the statistical information fixation unit 170 fixes the statistical information by entering a command described as an example in FIG. 5 to the database system 200.

As described above, the performance verification execution unit 120 of the information processing apparatus 100 repeatedly adjusts the table selection criteria 114 until the result of the performance verification satisfies the performance criterion. As a result, the tables whose statistical information is to be fixed are determined.

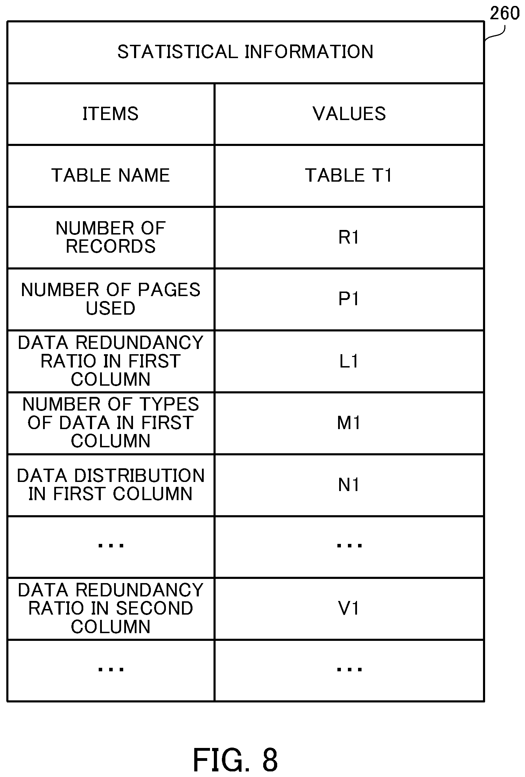

FIG. 8 is a diagram illustrating an example of statistical information.

The statistical information 260 is held in the database system 200. The statistical information 260 may be held in the storage unit 110. The statistical information 260 includes items and values. As the items, the item names of the statistical information are held. The item names are, for example, "table name", "number of records", "number of pages used", "data redundancy ratio in first column", "number of types of data in first column", "data distribution in first column", and "data redundancy ratio in second column". As the values, the values corresponding to their respective items are held. For example, the statistical information 260 includes a value "table T1" as the table name, a value "R1" as the number of records, a value "P1" as the number of pages used, a value "L1" as the data redundancy ratio in the first column, a value "M1" as the number of types of data in the first column, a value "N1" as the data distribution in the first column, and a value "V1" as the data redundancy ratio in the second column. As described above, the statistical information 260 includes, per table, information such as the number of records and the number of pages used, and includes, per column, information such as the data duplication ratio and the number of types of data.

As described above, the statistical information 260 is created for each table. Other statistical information including the statistical information 261 and the dummy statistical information 280 also includes the same items and values as those of the statistical information 260.

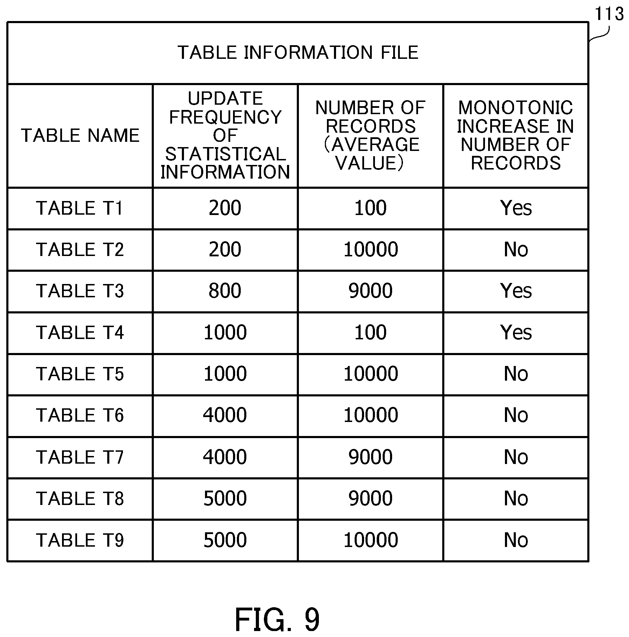

FIG. 9 is a diagram illustrating an example of a table information file.

The table information file 113 includes items such as "table name", "update frequency of statistical information", "number of records (average value)", and "monotonic increase in number of records". Under the item "table name", table names are registered. Under the item "update frequency of statistical information", update frequencies corresponding to their respective statistical information are registered. The update frequency may be referred to as the number of updates in the performance verification period. Under the item "number of records (average value)", an average number of records in the performance verification period is registered for each table. Under the item "monotonic increase in number of records", information indicating whether the number of records has monotonically increased in the performance verification period is registered for each table. "Yes" under "monotonic increase in number of records" indicates that the number of records has monotonically increased. "No" under "monotonic increase in number of records" indicates that the number of records has not monotonically increased.

For example, the table information file 113 includes a record indicating "table T1" as the table name, "200" as the update frequency of the statistical information, "100" as the number of records (average value), and "Yes" as the monotonic increase in the number of records. The table information file 113 also includes records indicating information about other tables.

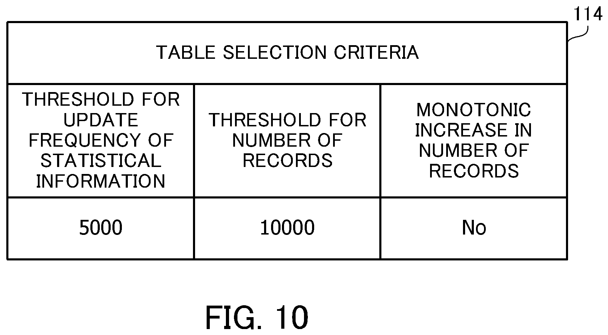

FIG. 10 is a diagram illustrating an example of table selection criteria.

The table selection criteria 114 includes a threshold (first threshold) for the update frequency of the statistical information, a threshold (second threshold) for the number of records, and a criterion for the monotonic increase in the number of records.

In this example according to the second embodiment, the initial threshold for the update frequency of the statistical information is "5000", and the initial threshold for the number of records is "10000". The criterion for the monotonous increase in the number of records is "No". That is, a table in which the number of records does not monotonically increase is a statistical information fixation candidate. On the other hand, a table in which the number of records monotonically increases is excluded from the statistical information fixation candidates.

Here, the performance degradation may occur in a situation in which data changes to such an extent that further update is needed before the update of the statistical information is completed. That is, as the update frequency of the statistical information and the number of records increase, the performance degradation is more likely to occur. Therefore, by using the update frequency of the statistical information and the number of table records affecting the update time as the table selection criteria 114, it is possible to appropriately select the statistical information fixation targets.

In addition, in the case of a table in which the number of records monotonically increases, even if the update of the statistical information is delayed, using the statistical information that follows the data distribution with a delay results in creation of a more appropriate execution plan than not using it. This is because, even if the statistical information is fixed at a certain point in time, it is clear that the deviation between the fixed statistical information and the table state increases with the passage of time due to the monotonic increase in the number of records.

The initial thresholds are determined as follows. The information processing apparatus 100 sets strict conditions for the initial thresholds and eases the conditions based on the verification result. In this way, it is possible to select a minimum number of effective tables. Therefore, the selection criteria adjustment unit 150 extracts tables in which the update frequency of the statistical information and the number of records are greater than their respective median values, based on the result of the initial performance verification in which the statistical information about all the tables is not fixed. For example, the selection criteria adjustment unit 150 scales the update frequency of the statistical information and the number of records for each of the extracted tables, and sets the update frequency of the statistical information and the number of records in a table having the maximum Euclidean distance from the origin as the initial thresholds. However, the initial thresholds may be set in advance by the user.

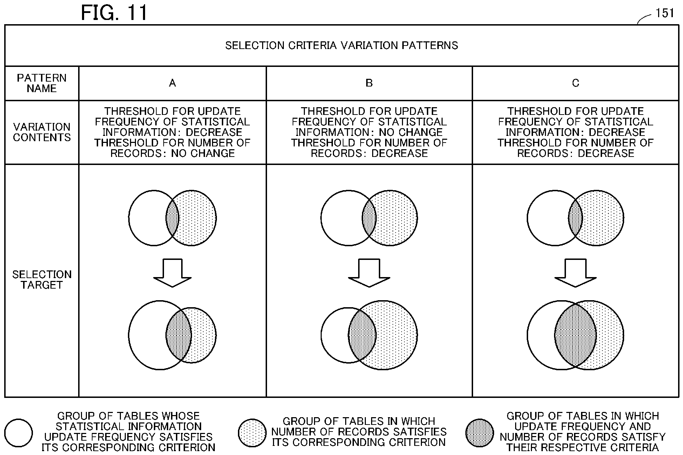

FIG. 11 is a diagram illustrating an example of selection criteria variation patterns.

The information processing apparatus 100 fixes the statistical information about a selected table, executes the performance verification again, and repeatedly gives feedback to the table selection criteria 114 based on the result.

Selection criteria variation patterns 151 illustrate variation patterns of the table selection criteria 114 by the selection criteria adjustment unit 150. When a performance criterion is not satisfied in the performance verification in which the statistical information about a table is fixed, the selection criteria adjustment unit 150 changes at least one selection criterion based on three patterns A, B, and C.

In pattern A, the threshold for the update frequency of the statistical information is decreased, and the threshold for the number of records is not changed.

In pattern B, the threshold for the update frequency of the statistical information is not changed, and the threshold for the number of records is decreased.

In pattern C, both the threshold for the update frequency of the statistical information and the threshold for the number of records are decreased.

The decrease amounts of the thresholds in patterns A, B, and C are determined in advance.

In FIG. 11, how a selection target table changes as a result of the change based on patterns A, B, and C is represented by Venn diagrams. In pattern A, the number of tables whose statistical information update frequency satisfies its corresponding criterion increases, and thus the number of tables in which both the update frequency and the number of records satisfy their respective criteria increases. In pattern B, the number of tables in which the number of records satisfies its corresponding criterion increases, and thus the number of tables in which both the update frequency and the number of records satisfy their respective criteria increases. In pattern C, the number of tables in which both the update frequency of the statistical information and the number of records satisfy their respective criteria increases.

When the performance criterion is not satisfied by the performance verification, the information processing apparatus 100 executes the performance verification again by using the table selection criteria adjusted based on each of the patterns A, B, and C.

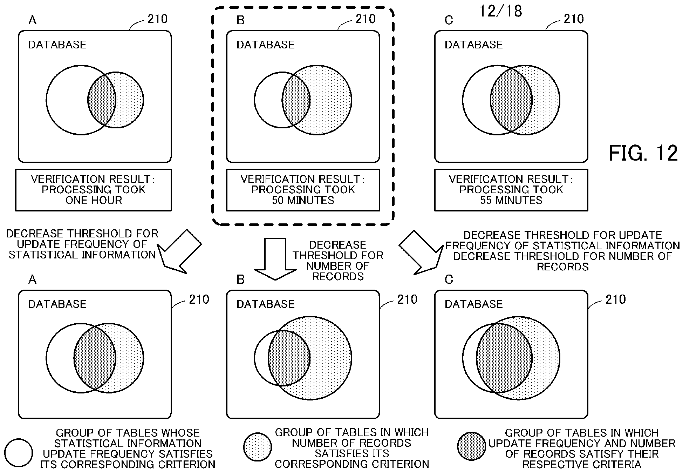

FIG. 12 is a diagram illustrating an adjustment example of the selection criteria.

The following example assumes that the performance determination unit 140 has obtained verification results indicating that the immediately preceding performance verification on the database 210 took one hour based on pattern A, 50 minutes based on pattern B, and 55 minutes based on pattern C. This example in FIG. 12 also assumes that these verification results do not satisfy the performance criterion. In this case, the performance determination unit 140 adopts the table selection criteria based on pattern B indicating the best performance. Then, the selection criteria variation patterns 151 apply patterns A, B, and C to the table selection criteria, so as to create three table selection criteria. Next, by using the three table selection criteria, the selection criteria variation patterns 151 execute the performance verification again.

In FIG. 12, Venn diagrams represent how a table selected changes when each of the patterns A, B, and C is applied to the table selection criteria of the original pattern B. As described above, in pattern A, the selection criteria adjustment unit 150 decreases only the threshold for the update frequency of the statistical information. In pattern B, the selection criteria adjustment unit 150 decreases only the threshold for the number of records. In pattern C, the selection criteria adjustment unit 150 decreases both the threshold for the update frequency of the statistical information and the threshold for the number of records.

Next, a processing procedure executed by the information processing apparatus 100 will be described.

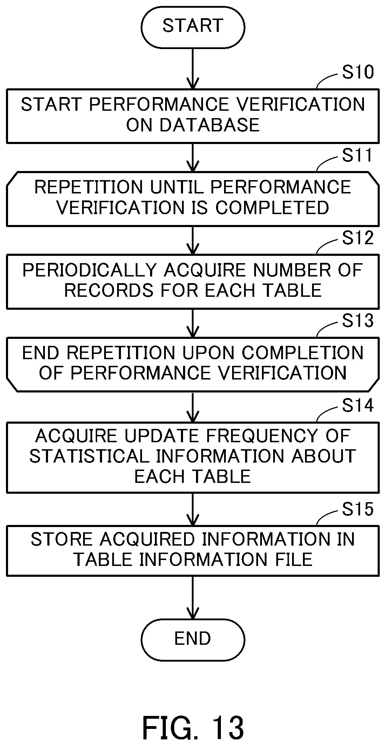

FIG. 13 is a diagram illustrating a processing example of performance verification.

(S10) The performance verification execution unit 120 starts performance verification on the database 210. The performance verification execution unit 120 enters the test set 112 to the database system 200 and causes the database system 200 to execute processing on the database 210.

(S11) The table information collection unit 130 repeatedly executes step S12 until the performance verification is completed.

(S12) The table information collection unit 130 periodically acquires the number of records for each table.

(S13) When the performance verification is completed, the table information collection unit 130 ends the repetition. When the performance verification is completed, the performance verification execution unit 120 acquires the time needed for processing the test set 112 as a result of the current performance verification, and stores the time in the storage unit 110.

(S14) The table information collection unit 130 acquires the update frequency of the statistical information about each table. For example, the table information collection unit 130 may acquire the number of updates of the statistical information about each table during the performance verification from the database system 200. The table information collection unit 130 may acquire an update history of statistical information about each table during the performance verification from the database system 200, and may acquire the number of updates of the statistical information about each table during the performance verification based on the update history.

(S15) The table information collection unit 130 stores the information acquired by the performance verification in the table information file 113. Specifically, the table information collection unit 130 records the update frequency of the statistical information about each table and an average number of records in each table in the performance verification period in the table information file 113. In addition, the table information collection unit 130 records, in the table information file 113, whether the number of records in each table has monotonically increased based on the number of records for each table acquired periodically. Then, the table information collection unit 130 ends the performance verification process.

In step S13, when the initial performance verification is completed, the performance verification execution unit 120 resets the database 210 to the pre-performance-verification state.

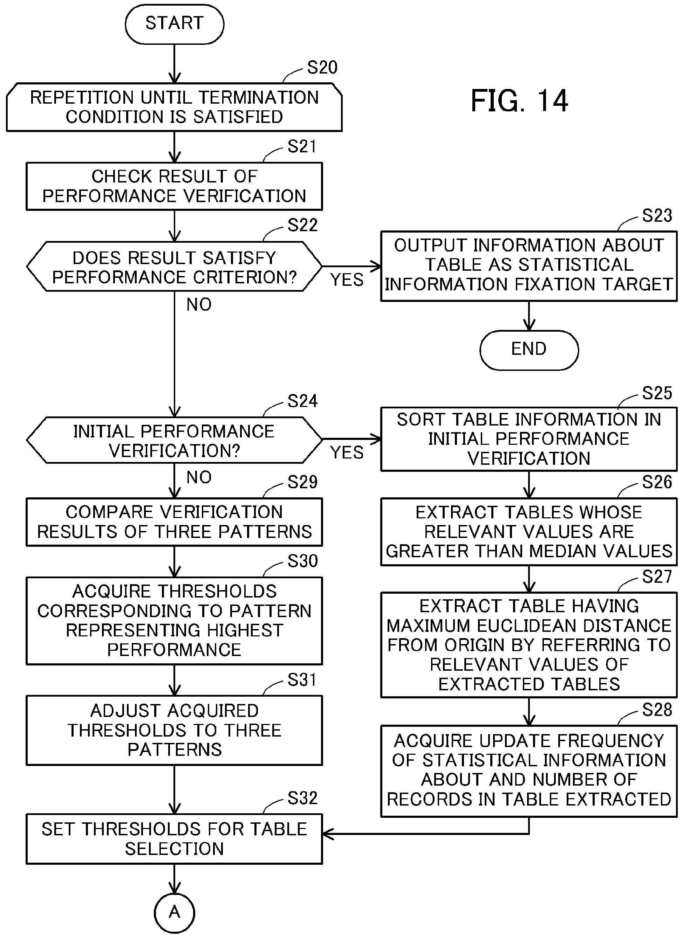

FIG. 14 is a diagram illustrating the first half of a processing example of table selection.

(S20) The information processing apparatus 100 repeatedly executes the procedure illustrated in steps S21 to S39 until the termination condition included in the setting file 111 is satisfied. The performance determination unit 140 determines that the termination condition is satisfied when the performance verification result satisfies the performance criterion or when the number of times of verification determined in advance by the user is exceeded, for example.

(S21) The performance determination unit 140 checks the result of the previous performance verification held in the storage unit 110.

(S22) The performance determination unit 140 determines whether the result of the performance verification satisfies the performance criterion included in the setting file 111. If the result of the performance verification satisfies the performance criterion, the processing proceeds to step S23. If the result of the performance verification does not satisfy the performance criterion, the process proceeds to step S24. For example, the performance determination unit 140 determines whether the processing of the test set 112 has been completed within a processing time Tp, which is the performance criterion. Herein, the result of the performance verification is represented by a processing time Tr. In this case, if Tr ≤ Tp, the performance criterion is satisfied, and if Tr > Tp, the performance criterion is not satisfied.

(S23) The table selection unit 160 outputs information about the table as the statistical information fixation target selected based on the current table selection criteria. That is, the table selection unit 160 outputs the information about the table whose statistical information is fixed in the performance verification in which the result of the performance verification has been determined to satisfy the performance criteria. For example, the table selection unit 160 causes the display 51 to display a list indicating tables whose statistical information is to be fixed, or transmits the list to a terminal device used by a user via the network 50. If there are a plurality of results that satisfy the performance criterion, the table selection unit 160 adopts a table that best satisfies the performance criterion, that is, a table indicating the shortest time needed to execute the test set 112. Then, the table selection process ends.

(S24) The selection criteria adjustment unit 150 determines whether the current performance verification is the initial performance verification. If the current performance verification is the initial performance verification, the process proceeds to step S25. If not, the process proceeds to step S29. For example, in the initial performance verification, the statistical information about all the tables in the database 210 is not fixed.

(S25) The table selection unit 160 sorts the table information included in the table information file 113 acquired in the initial performance verification according to the update frequency of the statistical information and the number of records.

(S26) The table selection unit 160 extracts, from the table information file 113, tables in which the update frequency of the statistical information and the number of records are greater than their respective median values.

(S27) The table selection unit 160 refers to the update frequency of the statistical information and the number of records corresponding to the individual extracted table, and extracts a table having the maximum Euclidean distance from the origin. Here, the origin is a point at which the update frequency of the statistical information is 0 and the number of records is 0.

(S28) The table selection unit 160 acquires the update frequency of the statistical information about and the number of records in the table extracted in step S27 as the thresholds (initial thresholds) for the table selection. Then, the process proceeds to step S32. The table selection unit 160 may acquire a value smaller than the update frequency of the statistical information about the table extracted in step S27 by a predetermined value and a value smaller than the number of records extracted in step S27 by a predetermined value as the thresholds (initial thresholds) for the table selection.

(S29) The selection criteria adjustment unit 150 compares the verification results of the three patterns in the selection criteria variation patterns 151.

(S30) The selection criteria adjustment unit 150 acquires the threshold for the update frequency of the statistical information and the threshold for the number of records corresponding to the pattern representing the highest performance. The result having the highest performance means the processing completed in the shortest time based on the test set 112.

(S31) The selection criteria adjustment unit 150 adjusts the thresholds acquired in step S30 to the three patterns, that is, patterns A, B, and C, in the selection criteria variation patterns 151.

(S32) The selection criteria variation patterns 151 set thresholds for the table selection. Specifically, the selection criteria variation patterns 151 set each threshold acquired in step S28 or each threshold adjusted in step S31 in the table selection criteria 114. Then, the process proceeds to step S33.

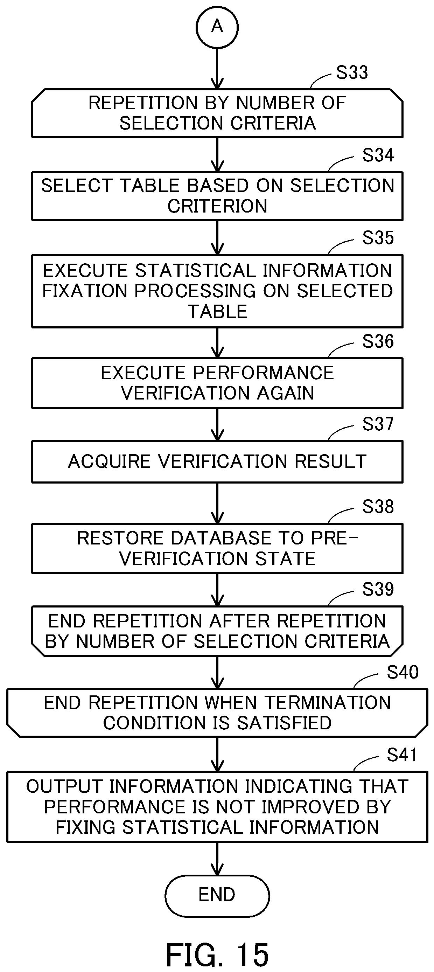

FIG. 15 is a diagram illustrating the second half of the processing example of the table selection.

(S33) The information processing apparatus 100 repeatedly executes steps S34 to S38 by the number of selection criteria indicated by the table selection criteria 114. Here, immediately after the initial performance verification, that is, if steps S25 to S28 are executed, the number of selection criteria is one. Immediately after the second and subsequent performance verifications, that is, if steps S29 to S31 are executed, the number of selection criteria is three.

(S34) The table selection unit 160 selects a table from the tables 220, 221, and so on in the database 210 based on the selection criterion. Specifically, the table selection unit 160 selects a table in which the update frequency of the statistical information is greater than the first threshold, the number of records is greater than the second threshold, and the number of records has not monotonically increased as the statistical information fixation target, based on the selection criterion.

(S35) The statistical information fixation unit 170 executes statistical information fixation processing on the selected table. That is, the statistical information fixation unit 170 enters a statistical information fixation command specifying the table to the database system 200, and causes the database system 200 to generate dummy statistical information.

(S36) The performance verification execution unit 120 executes the performance verification again on the database 210. The procedure of re-execution of the performance verification is the same as that in FIG. 13.

(S37) When the performance verification is completed, the performance verification execution unit 120 acquires the time needed for processing the test set 112 as a result of the current performance verification, and stores the time in the storage unit 110.

(S38) The performance verification execution unit 120 restores the database 210 to its pre-performance-verification state.

(S39) The information processing apparatus 100 ends the repetition of steps S34 to S38 after repeating steps S34 to S38 by the number of selection criteria.

(S40) When the termination condition included in the setting file 111 is satisfied, the information processing apparatus 100 ends the repetition of steps S21 to S39.

(S41) The table selection unit 160 outputs information indicating that the processing performance for the database 210 is not improved by fixing the statistical information. Here, when step S41 is executed, it is determined that all the performance verification results do not satisfy the performance criterion in step S22. Therefore, the execution of step S41 means that the performance is not improved by fixing the statistical information. For example, the table selection unit 160 may cause the display 51 to display a message indicating that the processing performance for the database 210 is not improved by fixing the statistical information, or may transmit the message to the terminal device used by the user. Then, the table selection process ends.

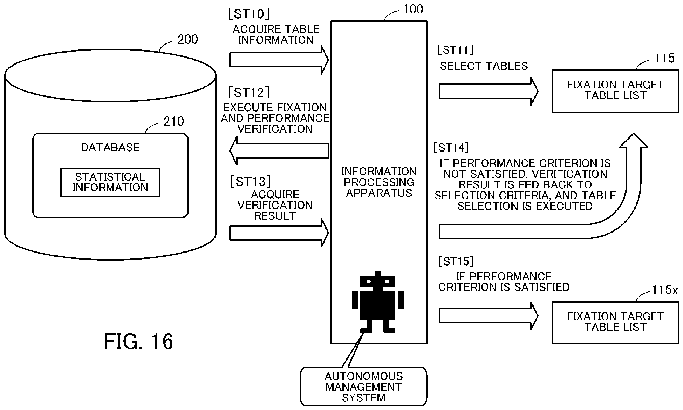

FIG. 16 is a diagram illustrating an example of a flow of the table selection.

The information processing apparatus 100 autonomously executes the table selection as follows. Therefore, the information processing apparatus 100 may be referred to as an autonomous management system. First, the information processing apparatus 100 acquires table information about each table in the database 210 through the initial performance verification on the database 210 in the database system 200 (step ST10).

The information processing apparatus 100 selects tables whose statistical information is to be fixed based on the acquired table information, and stores the identifiers of the selected tables in the fixation target table list 115 (step ST11).

Here, the fixation target table list 115 is a list of tables whose statistical information is to be fixed. The fixation target table list 115 is held in the storage unit 110.

The information processing apparatus 100 fixes the statistical information about the tables indicated by the fixation target table list 115, and further executes the performance verification on the database 210 (step ST12).

The information processing apparatus 100 acquires a verification result (step ST13). At this time, the information processing apparatus 100 also acquires table information about each table.

If the verification result does not satisfy the performance criterion, the information processing apparatus 100 feeds back the verification result to the selection criteria, and executes table selection (step ST14). In this case, as described above, three selection criteria are newly generated from the selection criteria representing the best verification result. Then, the information processing apparatus 100 executes steps ST12 and ST13 again using each selection criterion.

On the other hand, if the verification result satisfies the performance criterion, the information processing apparatus 100 stores the identifier of the table selected based on the selection criteria representing the best verification result in a fixation target table list 115x (step ST15). When a plurality of verification results satisfy the performance criterion, the information processing apparatus 100 stores, in the fixation target table list 115x, the identifier of the table whose statistical information is fixed in the performance verification representing the best verification result.

The fixation target table list 115x is a final selection result. The information processing apparatus 100 outputs the fixation target table list 115x. For example, the information processing apparatus 100 may cause the display 51 to display the table indicated by the fixation target table list 115x. The information processing apparatus 100 may transmit the fixation target table list 115x to the terminal device used by the user via the network 50.

Next, a specific example of the table selection by the information processing apparatus 100 will be described.

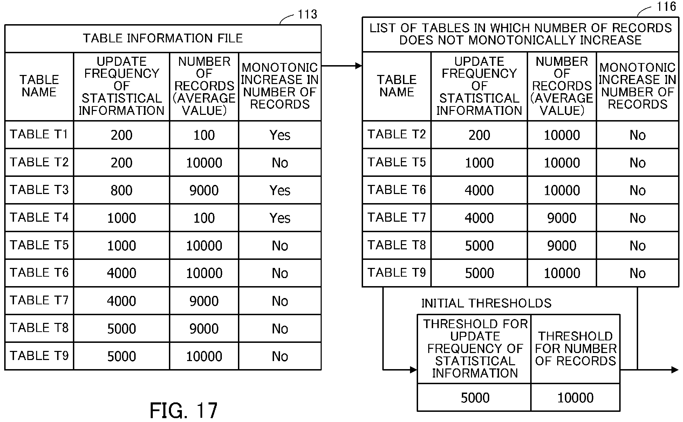

FIG. 17 is a diagram illustrating a specific example of the table selection.

For example, the database 210 includes nine tables T1 to T9. In the initial performance verification, the table information about the tables T1 to T9 illustrated in FIG. 9 is acquired from the table information file 113.

First, the selection criteria adjustment unit 150 acquires a list 116 of tables in which the number of records does not monotonically increase, that is, tables indicating "No" as "monotonic increase in number of records", from the table information file 113. Then, among the tables T6 to T9 in which the update frequency of the statistical information and the number of records are greater than their respective median values, the selection criteria adjustment unit 150 determines the table T9 in which the Euclidean distance between the coordinates indicated by these values and the origin is the largest. The selection criteria adjustment unit 150 sets the update frequency "5000" of the statistical information and the number of records "10000" corresponding to the table T9 in the table selection criteria 114 as the initial thresholds.

As described above, the selection criteria adjustment unit 150 may set, for example, a value (for example, "4990") smaller than the update frequency "5000" corresponding to the table T9 by a predetermined value (for example, "10") as the initial threshold for the update frequency. The selection criteria adjustment unit 150 may set a value (for example, "9990") smaller than the number of records "10000" corresponding to the table T9 by a predetermined value (for example, "10") as the initial threshold for the number of records.

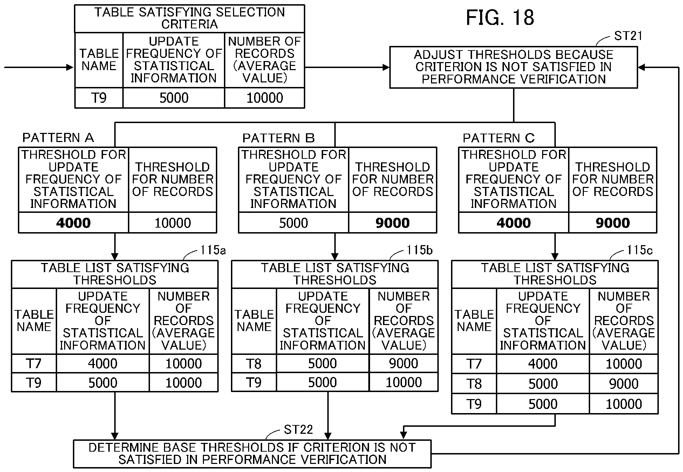

FIG. 18 is a diagram illustrating the second half of the specific example of the table selection.

In the following description, for example, the table T9 is abbreviated as "T9". Regarding the table T9, the update frequency of the statistical information and the number of records are greater than their respective initial thresholds, and there is no monotonic increase in the number of records. The present example assumes that the previous performance verification result does not satisfy the performance criterion.

Since the performance criterion is not satisfied in the performance verification, the selection criteria adjustment unit 150 adjusts the thresholds (step ST21).

For example, it is assumed that "1000" is subtracted from the threshold (first threshold) for the update frequency of the statistical information and from the threshold (second threshold) for the number of records in the threshold adjustment.

In this case, regarding the selection criteria corresponding to pattern A, the selection criteria adjustment unit 150 sets the threshold for the update frequency of the statistical information to "4000" and the threshold for the number of records to "10000".

In addition, regarding the selection criteria corresponding to pattern B, the selection criteria adjustment unit 150 sets the threshold for the update frequency of the statistical information to "5000" and the threshold for the number of records to "9000".

Further, regarding the selection criteria corresponding to pattern C, the selection criteria adjustment unit 150 sets the threshold for the update frequency of the statistical information to "4000" and the threshold for the number of records to "9000".

In this case, the table selection unit 160 acquires a table list 115a about the selection criteria corresponding to pattern A. The table list 115a includes the identifiers of the tables T7 and T9.

Further, the table selection unit 160 acquires a table list 115b about the selection criteria corresponding to pattern B. The table list 115b includes the identifiers of the tables T8 and T9.

Further, the table selection unit 160 acquires a table list 115c about the selection criteria corresponding to pattern C. The table list 115c includes the identifiers of the tables T7, T8, and T9.

The statistical information fixation unit 170 executes a fixation process of the statistical information about the tables T7 and T9 in the table list 115a. The performance verification execution unit 120 executes the performance verification of the database 210 after the statistical information fixation process, and acquires the performance verification result and the table information about each table. After the performance verification, the performance verification execution unit 120 restores the database 210 to the pre-performance-verification state.

In addition, the statistical information fixation unit 170 executes the fixation process of the statistical information about the tables T8 and T9 in the table list 115b. The performance verification execution unit 120 executes the performance verification of the database 210 after the statistical information fixation process, and acquires the performance verification result and the table information about each table. After the performance verification, the performance verification execution unit 120 restores the database 210 to the pre-performance-verification state.

Further, the statistical information fixation unit 170 executes the fixation process of the statistical information about the tables T7, T8, and T9 in the table list 115c. The performance verification execution unit 120 executes the performance verification of the database 210 after the statistical information fixation process, and acquires the performance verification result and the table information in each table. After the performance verification, the performance verification execution unit 120 restores the database 210 to the pre-performance-verification state.

When none of the performance verification results corresponding to three patterns A, B, and C satisfies the performance criterion, the selection criteria adjustment unit 150 determines a set of base thresholds from the sets of thresholds of the three patterns, and repeats the adjustment of the thresholds in step ST21 (step ST22). The set of base thresholds is a set of thresholds representing the best performance verification result.

When at least one performance verification result satisfies the performance criterion, the selection criteria adjustment unit 150 stores the identifier of the table selected by the set of thresholds representing the best performance verification result in the fixation target table list 115x, and outputs the fixation target table list 115x.

As described above, the information processing apparatus 100 according to the second embodiment determines a table whose statistical information has an update frequency that is greater than the first threshold and in which the number of records is greater than the second threshold as a table whose statistical information is to be fixed. In this way, the information processing apparatus 100 is able to appropriately select a table whose statistical information is to be fixed.

In addition, the information processing apparatus 100 is able to support fixation of statistical information for the purpose of preventing performance degradation due to a rapid change in data in advance, for tables in an effective and appropriate range. The information processing apparatus 100 is able to appropriately adjust the number of tables whose statistical information is fixed to the minimum number that satisfies the performance criterion by gradually easing the selection conditions based on the performance verification result.

In addition, with the information processing apparatus 100, since a table whose statistical information is to be fixed is appropriately selected from all the tables in the database 210, there is no need to set all the tables as the statistical information fixation targets. As a result, the information processing apparatus 100 does not need to perform the monitoring or maintenance work related to the statistical information on all the tables. Thus, as compared with the case where all the tables are set as the statistical information fixation targets, the cost needed for the work is reduced. In other words, the information processing apparatus 100 is able to appropriately narrow down the tables to be subjected to the monitoring or maintenance work. As described above, with the information processing apparatus 100, it is possible to efficiently suppress degradation in processing performance of the database 210. Since the information processing apparatus 100 is able to adjust the number of tables whose statistical information is fixed to the minimum number that satisfies the performance criterion, the information processing apparatus 100 is able to perform control such that more tables than needed will not be selected as the statistical information fixation targets.

For example, there is a method in which a part of the tables is set as a statistical information fixation target. In this method, a table related to a query in which performance degradation has occurred is identified, and this table is set as a fixation target. However, in this method, since measures are taken only after performance degradation is detected, there is a problem in that performance degradation will not be prevented in advance.

On the other hand, with the information processing apparatus 10, even if performance degradation is not detected, it is possible to appropriately select a table whose statistical information is to be fixed. Therefore, the information processing apparatus 100 is able to prevent performance degradation of query execution on the database 210 in advance.

As described above, for example, the information processing apparatus 100 executes the following processing.

The processor 101 acquires the update frequency of the statistical information acquired for each of the plurality of tables included in the database 210 and the number of records in each of the plurality of tables, and stores the update frequency and the number of records in the storage unit 110. The processor 101 compares the update frequency of the statistical information about each of the plurality of tables with a first threshold, and compares the number of records in each of the plurality of tables with a second threshold. The processor 101 determines, among the plurality of tables, a table whose statistical information has an update frequency that is greater than the first threshold and in which the number of records is greater than the second threshold as a statistical information fixation target.

In this way, the information processing apparatus 100 is able to appropriately select a table whose statistical information is to be fixed. In addition, the information processing apparatus 100 is able to support fixation of statistical information for the purpose of preventing performance degradation due to a rapid change in data in advance, for tables in an effective and appropriate range. For example, with the information processing apparatus 100, even if performance degradation is not detected, it is possible to select a table whose statistical information is to be fixed, unlike the method of fixing statistical information about a table related to a query in which performance degradation has actually occurred. Thus, the information processing apparatus 100 is able to suppress deterioration in processing performance (for example, an increase in processing time) of queries on the database 210. The "number of records" may be an average number of records in a period in which the update frequency of the statistical information is acquired. However, the "number of records" may be the minimum number or the maximum number of records in the period, or another value such as a median value or a percentile value (for example, a 60th percentile value) of the number of records in the period.

For example, the processor 101 may determine that a table whose statistical information has an update frequency that is equal to or less than the first threshold or in which the number of records is equal to or less than the second threshold is not a statistical information fixation target.

In addition, the processor 101 may determine, among the plurality of tables, a table whose statistical information has an update frequency that is equal to or greater than the first threshold and in which the number of records is equal to or greater than the second threshold as a statistical information fixation target. In this case, the processor 101 determines that a table whose statistical information has an update frequency that is less than the first threshold or in which the number of records is less than the second threshold is not a statistical information fixation target.

The processor 101 may determine, among the plurality of tables, a table in which the number of records does not monotonically increase as a statistical information fixation target. In this way, the information processing apparatus 100 is able to more appropriately select a table whose statistical information is to be fixed. If the statistical information about a table in which the number of records monotonically increases is fixed, the deviation between the fixed statistical information and the state of the table increases with the passage of time, and the possibility that the fixed statistical information does not represent the actual state of the table increases. For this reason, the information processing apparatus 100 excludes the table in which the number of records monotonically increases from the statistical information fixation targets.

The processor 101 may perform verification processing including a first process and a second process. The first process is a process of causing the database system 200 including the database 210 to fix statistical information about a table determined as a fixation target and to execute a predetermined query set. The second process is a process of acquiring the execution time from the start to the completion of the execution of the query set, the update frequency of the statistical information about each of the plurality of tables during execution of the query set, and the number of records in each of the plurality of tables. The processor 101 is able to determine whether the execution time is longer than a predetermined time. The predetermined time is, for example, a time needed by the performance criterion set in the setting file 111. If the execution time is longer than the predetermined time, the processor 101 may perform adjustment to decrease at least one of the first threshold and the second threshold, fix the statistical information about the table determined based on the first threshold and second threshold obtained after the adjustment, and perform the performance verification process again.

In this way, the information processing apparatus 100 is able to select an appropriate number of tables while gradually increasing the number of tables selected as the statistical information fixation targets. Therefore, the information processing apparatus 100 is able to prevent an unnecessary table from being selected as a statistical information fixation target. As a result, the information processing apparatus 100 achieves reduction of the cost of the work of monitoring the tables whose statistical information is fixed and the work of the maintenance of the statistical information. The test set 112 is an example of the query set.

When the execution time is equal to or shorter than the predetermined time, the processor 101 outputs information indicating the individual table as a statistical information fixation target determined based on the first threshold and the second threshold.

Accordingly, the information processing apparatus 100 is able to support the user to fix the statistical information about an appropriate table. For example, based on the information that has been output by the information processing apparatus 100, the user is able to fix the statistical information about the corresponding table in the database system in the production environment. The fixation target table list 115x is an example of the information indicating the tables as the statistical information fixation targets.

In addition, the processor 101 may cause the database system 200 to execute the query set without fixing the statistical information about each of the plurality of tables and acquire the update frequency of the statistical information about each of the plurality of tables during execution of the query set and the number of records in each of the plurality of tables. The processor 101 may calculate, for each of the plurality of tables, the distance between the coordinates indicated by a set of the update frequency of the statistical information and the number of records and an origin at which the update frequency of the statistical information and the number of records are 0. The processor 101 may determine the initial value of the first threshold and the initial value of the second threshold based on the update frequency of the statistical information about and the number of records in a table having the maximum distance.

As a result, the information processing apparatus 100 is able to appropriately determine the initial values for the first threshold and the second threshold. Specifically, the information processing apparatus 100 is able to efficiently determine a minimum number of tables as the statistical information fixation targets by setting relatively large values as the first threshold and the second threshold in the initial phase and by gradually decreasing the first threshold and the second threshold based on the performance verification results. The table used to determine the initial values of the first threshold and the second threshold may be a table in which the number of records does not monotonically increase among all the tables in the database 210.

Further, the processor 101 is able to output information about the individual table determined as the statistical information fixation target. Accordingly, the information processing apparatus 100 is able to support the user to fix the statistical information about an appropriate table. For example, based on the information that has been output by the information processing apparatus 100, the user is able to fix the statistical information about the corresponding table in the database system in the production environment. The database system in the production environment is able to appropriately generate a query execution plan by fixing the statistical information about the corresponding table, acquiring the statistical information about the other tables as usual, and creating a query execution plan based on the statistical information about each table. Therefore, the information processing apparatus 100 is able to support efficient improvement of the query processing performance in the database system in the production environment.

It is possible to realize the information processing according to the first embodiment by causing the processing unit 12 to execute a program. It is possible to realize the information processing according to the second embodiment by causing the processor 101 to execute a program. Any one of these programs may be recorded in the computer-readable recording medium 53.

For example, the program may be distributed by distributing the recording medium 53 on which the program is recorded. Alternatively, the program may be stored in another computer and distributed via a network. For example, a computer may store (install) the program recorded in the recording medium 53 or the program received from another computer in a storage device such as the RAM 102 or the HDD 103, read the program from the storage device, and execute the program.

In one aspect, a table is appropriately selected as a statistical information fixation target.

## Claims

1. An information processing apparatus comprising:
memory means (11) for storing an update frequency of statistical information (22a, 22b, ...) acquired for each of a plurality of tables (21a, 21b, ...) included in a database (21) and a number of records in each of the plurality of tables; and
processing means (12) for determining, among the plurality of tables, a table whose statistical information has an update frequency that is greater than a first threshold and in which the number of records is greater than a second threshold, as a statistical information fixation target.

2. The information processing apparatus according to claim 1, wherein the processing means (12) determines, among the plurality of tables (21a, 21b, ...), a table in which the number of records does not monotonically increase, as the statistical information fixation target.

3. The information processing apparatus according to claim 1, wherein the processing means (12)
performs a performance verification process including a first process of causing a database system (20) including the database (21) to fix the statistical information about the table determined as the statistical information fixation target and to execute a predetermined query set, and a second process of acquiring an execution time from start to completion of execution of the predetermined query set, the update frequency of the statistical information about each of the plurality of tables (21a, 21b, ...) during the execution of the predetermined query set, and the number of records in each of the plurality of tables, and
determines whether the execution time is longer than a predetermined time, performs, upon detecting that the execution time is longer than the predetermined time, adjustment to decrease at least one of the first threshold or the second threshold, fixes the statistical information about the table determined based on the first threshold and the second threshold obtained after the adjustment, and performs the performance verification process again.

4. The information processing apparatus according to claim 3, wherein the processing means (12) outputs, upon detecting that the execution time is equal to or shorter than the predetermined time, information about the table determined as the statistical information fixation target based on the first threshold and the second threshold.

5. The information processing apparatus according to claim 3, wherein the processing means (12)
causes the database system (20) to execute the predetermined query set without fixing the statistical information about each of the plurality of tables (21a, 21b, ...), and acquires the update frequency of the statistical information about each of the plurality of tables during the execution of the predetermined query set and the number of records in each of the plurality of tables,
calculates, for each of the plurality of tables, a distance between coordinates indicated by a set of the update frequency of the statistical information and the number of records and an origin at which the update frequency of the statistical information and the number of records are 0, and
determines an initial value of the first threshold and an initial value of the second threshold based on the update frequency of the statistical information about and the number of records in a table having a maximum distance.

6. The information processing apparatus according to claim 1, wherein the processing means (12) outputs information about the table determined as the statistical information fixation target.

7. An information processing method executed by a computer, the information processing method comprising:
acquiring an update frequency of statistical information about each of a plurality of tables (21a, 21b, ...) included in a database (21) and a number of records in each of the plurality of tables; and
determining, among the plurality of tables, a table whose statistical information has an update frequency that is greater than a first threshold and in which the number of records is greater than a second threshold, as a statistical information fixation target.

8. A computer program that causes a computer to execute a process comprising:
acquiring an update frequency of statistical information about each of a plurality of tables (21a, 21b, ...) included in a database (21) and a number of records in each of the plurality of tables; and
determining, among the plurality of tables, a table whose statistical information has an update frequency that is greater than a first threshold and in which the number of records is greater than a second threshold, as a statistical information fixation target.
